# EUROPÄISCHE PATENTANMELDUNG

(11) **EP 4 614 243 A1**
(43) Veröffentlichungstag der Anmeldung: **10.09.2025**
(21) Anmeldenummer: 24161378.5
(22) Anmeldetag: 05.03.2024
(51) Int. Cl.: G05B 19/042, G05B 19/05

(54) **VERFAHREN ZUR COMPUTER-GESTÜTZTEN INSTALLATION UND/ODER INBETRIEBNAHME UND/ODER WARTUNG UND/ODER MODERNISIERUNG EINER INDUSTRIELLEN ANLAGE**

(71) Anmelder: Murrelektronik GmbH, 71570 Oppenweiler (DE)
(72) Erfinder: Pfestorf, Sebastian, 76137 Karlsruhe (DE); Zeller, Dr. Paul, 74223 Flein (DE)
(74) Vertreter: Goebel, Sebastian

(57) **Zusammenfassung**

Die Erfindung betrifft ein Verfahren (100) zur computer-gestützten Installation und/oder Inbetriebnahme und/oder Wartung und/oder Modernisierung einer industriellen Anlage.

## Beschreibung

Die vorliegende Erfindung betrifft ein Verfahren zur computer-gestützten Installation und/oder Inbetriebnahme und/oder Wartung und/oder Modernisierung einer industriellen Anlage.

### Stand der Technik

Es ist bekannt, dass die Komponenten einer industriellen Anlage in einer zentralen Topologie verschaltet sein können, bei welcher ein zentraler Schaltschrank direkt mit Geräten, wie beispielsweise Sensoren und Aktoren, verbunden ist. Alternativ kann die Anlage auch in einer dezentralen Topologie geplant werden. Dies bedeutet, dass dezentral angeordnete Anschlusselemente vorgesehen sind, an denen jeweils ein oder mehrere Geräte zur Bereitstellung von Automatisierungsfunktionen angeschlossen werden. Die dezentrale Topologie bietet den Vorteil, dass die Anlage einen flexibleren Aufbau hat, einfacherer zu installieren ist und eine höhere Effizienz und Wirtschaftlichkeit aufweisen kann.

Die Installation der Anlage kann im Einzelfall dennoch aufwendig sein, insbesondere, wenn eine Vielzahl verschiedener Geräte zum Einsatz kommt. Insbesondere kann hierbei eine SPS-Programmierung auch sehr aufwendig sein. Dabei müssen nach einer Installation ggf. noch Änderungen bei dem Aufbau der Anlage für die Programmierung berücksichtigt werden.

### Offenbarung der Erfindung

Gegenstand der Erfindung ist ein Verfahren mit den Merkmalen des Anspruchs 1, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur computer-gestützten Installation und/oder Inbetriebnahme und/oder Wartung und/oder Modernisierung einer industriellen Anlage. Unter einer Installation wird insbesondere die Montage und Verbindung von Komponenten der Anlage verstanden. Unter einer Inbetriebnahme kann entsprechend die erstmalige Inbetriebnahme der Anlage nach der Installation verstanden werden. Unter einer Wartung kann die regelmäßige Überprüfung und Instandhaltung der Anlage verstanden werden. Eine Modernisierung kann hingegen die Erneuerung oder Verbesserung der Anlage betreffen.

Das erfindungsgemäße Verfahren kann ein Bereitstellen einer Installationsvorgabe umfassen, insbesondere mit einem digitalen Schaltplan und/oder digitalen mechanischen Plan. Auf diese Weise kann ein zumindest teilweiser Aufbau, insbesondere ein mechanischer, ein fluider, ein hydraulischer, ein pneumatischer und/oder ein elektrischer Aufbau, zumindest eines Teils der Anlage vorgegeben werden. Bei diesem Aufbau können Geräte und Anschlusselemente, insbesondere Module, zur Bereitstellung von Automatisierungsfunktionen elektrisch und/oder für einen Signal- und/oder Datenaustausch miteinander im Feld, insbesondere kabelgebunden oder via Funk, verbunden sein und durch mindestens eine Steuerungseinrichtung auf Basis einer Steuerungsprogrammierung angesteuert werden.

Weiter kann das Verfahren ein Bereitstellen einer Installationsspezifikation umfassen, welche einen tatsächlichen zumindest teilweisen Aufbau zumindest des Teils der Anlage, insbesondere eine tatsächliche Verbindung der Geräte mit den Anschlusselementen, spezifiziert. Dabei kann die Installationsspezifikation aus einer automatisierten Dokumentation des tatsächlichen zumindest teilweisen Aufbaus während der Installation und/oder Inbetriebnahme und/oder Wartung und/oder aus einer dynamischen Erhebung bei der Anlage, insbesondere auf Basis der Installationsvorgabe, resultieren. Die automatisierte Dokumentation kann beispielsweise die dokumentierte Bestätigungen eines Benutzers umfassen, dass jeweilige Geräte mit einem Anschluss/Port eines der Anschlusselemente/Module entsprechend der Installationsvorgabe verbunden wurden. Jeder Installationsschritt kann hierbei bestätigt und dokumentiert worden sein, um eine vollständige und genaue Installationsspezifikation zu gewährleisten. Die dynamische Erhebung bei der Anlage kann z. B. dadurch erfolgen, dass während der Installation und/oder zumindest teilweisen Inbetriebnahme der Anlage automatisch eine Verbindungskarte erstellt wird, die mehrere/alle Verbindungen zwischen den Geräten und den Anschlusselementen erfasst. Dies kann bspw. durch eine Signal- und/oder Datenkommunikation mit den Anschlusselementen und/oder Geräten möglich sein. Auf diese Weise kann dynamisch und automatisiert der tatsächliche zumindest teilweise Aufbau der Anlage ermittelt werden, bevorzugt hinsichtlich der tatsächlichen Verbindungen der Geräte mit den Anschlusselementen.

Weiter kann das Verfahren ein Ermitteln einer Anpassungsspezifikation umfassen. Das Ermitteln kann auf Basis einer automatisierten Auswertung der Installationsspezifikation durchgeführt werden. Dabei kann die Anpassungsspezifikation eine Anpassung für die Steuerung, insbesondere der Steuerungsprogrammierung, vorzugsweise für eine SPSund/oder Steuerungsprojektdatei, spezifizieren. Die Anpassung kann bspw. dazu dienen, um die Steuerung, vorzugsweise Steuerungsprogrammierung, an den tatsächlichen zumindest teilweisen Aufbau anzupassen. Die Anpassungsspezifikation kann mit anderen Worten eine Modifikation für eine Steuerung, vorzugsweise für eine SPS- oder Steuerungsprojektdatei, umfassen. Weiter kann sie eine Spezifikation oder Beschreibung umfassen, wie eine Anpassung für die Steuerung erfolgen soll, z. B. in der Form einer Konfigurationsdatei oder einer Anleitung für einen Benutzer. Weiter kann sie eine Änderung der Anschlussadressierung spezifizieren, über welche eine Kommunikation mit Anschlüssen der Anschlusselemente möglich ist.

Weiter kann das Verfahren ein Bereitstellen der Anpassungsspezifikation für die Steuerungseinrichtung umfassen. Hierbei kann z. B. die Anpassungsspezifikation in einer Datei hinterlegt werden, damit sie in die Steuerungseinrichtung eingebunden werden kann. Auch ist es möglich, dass im Rahmen der Bereitstellung der Anpassungsspezifikation eine direkte Anpassung an der Steuerungseinrichtung und/oder der Steuerungsprogrammierung erfolgt. Die direkte Anpassung der Steuerungseinrichtung und/oder der Steuerungsprogrammierung ist bspw. automatisiert dadurch möglich, dass eine Software eingesetzt wird, die in der Lage ist, die Steuerungseinrichtung und/oder die Steuerungsprogrammierung automatisch zu analysieren und zu optimieren. Dabei können die Daten der Steuerungseinrichtung und/oder der Steuerungsprogrammierung von der Software erfasst und auf der Grundlage von vordefinierten Regeln und Algorithmen analysiert werden. Die Analyse kann ferner einen Vergleich mit der Anpassungsspezifikation umfassen. Auf Basis dieser Analyse können dann automatisch Anpassungen vorgenommen werden, um die Steuerungseinrichtung und/oder die Steuerungsprogrammierung an den tatsächlichen zumindest teilweisen Aufbau der Anlage anzupassen.

Es ist möglich, dass mehrere der Geräte mit einem jeweiligen Anschlusselement, vorzugsweise Modul, verbunden sind. Dies ermöglicht eine dezentrale Verschaltung der Geräte und damit eine Vereinfachung der Verkabelung bei der Anlage. Dabei kann das jeweilige Anschlusselement dazu dienen, die damit verbundenen Geräte mit einer Steuerungseinrichtung zu verbinden und/oder eine Daten- und/oder Signalübertragung an die damit verbundenen Geräte vorzunehmen.

Ferner ist es optional vorgesehen, dass die automatisierte Auswertung der Installationsspezifikation umfasst: Ermitteln eines Abgleichergebnisses auf Basis einer automatisierten Prüfung der bereitgestellten Installationsspezifikation hinsichtlich wenigstens einer Abweichung des tatsächlichen zumindest teilweisen Aufbaus zum vorgegebenen zumindest teilweisen Aufbaus. Dies kann dazu dienen, Abweichungen bei der Installation von der Installationsvorgabe zu ermitteln. Die automatisierte Prüfung kann bspw. die Prüfung umfassen, ob ein Gerät tatsächlich an einem vorgegebenen Anschluss eines Anschlusselements angeschlossen worden ist (elektrischer Soll/Ist-Abgleich).

Es ist ferner denkbar, dass das Ermitteln der Anpassungsspezifikation automatisiert dadurch erfolgt, dass zu jeder Abweichung des tatsächlichen zumindest teilweisen Aufbaus zum vorgegebenen zumindest teilweisen Aufbaus wenigstens eine Teilanpassung für die Steuerung und insbesondere der Steuerungsprogrammierung ermittelt wird, welche geeignet ist, die jeweilige Abweichung zu kompensieren. Die Aufgliederung der Anpassung in mehrere Teilanpassungen kann den Vorteil haben, dass eine bessere Kontrolle über den Anpassungsprozess erreicht wird. Durch die Aufteilung in mehrere Teilanpassungen kann jeder Teilprozess einzeln überwacht und optimiert werden, was zu einer höheren Gesamtqualität der Anpassung führen kann. Darüber hinaus kann die Aufteilung in Teilanpassungen auch die Effizienz des Anpassungsprozesses erhöhen, da die einzelnen Teilprozesse ggf. parallel ausgeführt werden können.

Ferner ist es optional vorgesehen, dass die Anpassung für die Steuerung und insbesondere der Steuerungsprogrammierung auf Basis der bereitgestellten Anpassungsspezifikation automatisiert erfolgt. Die kann z. B. durch eine programmgesteuerte Abarbeitung der Anpassungen möglich sein. Dies kann den Vorteil haben, dass die Anpassung der Steuerung schneller und effizienter erfolgt, da eine manuelle Programmierung vermieden werden kann.

Weiter kann die wenigstens eine Abweichung eine Abweichung der tatsächlichen Verbindung der Geräte mit den Anschlusselementen zu der vorgegebenen Verbindung hinsichtlich des verwendeten Geräts und/oder Anschlusselements und/oder Anschlusses, vorzugsweise Ports, des Anschlusselements betreffen. Dadurch können auch komplexe Anpassungen an der Steuerung vorgenommen werden, die ansonsten schwierig oder unmöglich wären.

Weiter kann die Anpassung für die Steuerung und insbesondere der Steuerungsprogrammierung insbesondere dadurch automatisiert erfolgen, dass das verwendete Gerät und/oder Anschlusselement und/oder der verwendete Port und/oder deren Kennzeichnung in der Steuerungsprogrammierung aktualisiert wird. Dies kann den Vorteil haben, dass Fehler vermieden werden, die durch manuelle Eingriffe bei der Programmierung entstehen könnten. Es ist außerdem möglich, dass die Anpassung automatisch durchgeführt wird, sobald ein neues Gerät oder Anschlusselement verbunden wird.

Bevorzugt kann im Rahmen der Erfindung vorgesehen sein, dass die wenigstens eine Abweichung eine Abweichung eines tatsächlichen Einbauorts wenigstens einer Komponente der Anlage, vorzugsweise wenigstens eines der Geräte und/oder Anschlusselemente, zu einem vorgegebenen Einbauort der Komponente betrifft. Dabei können den unterschiedlichen Einbauorten unterschiedliche Funktionen der Komponente zugeordnet sein. Weiter können die Anpassung für die Steuerung und insbesondere der Steuerungsprogrammierung dadurch automatisiert erfolgen, dass die Funktion der Komponente entsprechend dem tatsächlichen Einbauort aktualisiert wird. Dies kann den Vorteil haben, dass eine automatisierte Anpassung der Steuerung und der Steuerungsprogrammierung aufgrund der aktualisierten Funktion der Komponente erfolgen kann. Dadurch wird eine höhere Effizienz und Genauigkeit bei der Steuerung der Anlage erreicht. Der tatsächliche Einbauort kann hierzu bspw. anhand einer (digitalen) mechanischen Darstellung der Anlage (automatisiert) ermittelt werden. Ferner kann dem ermittelten Einbauort eine Funktion zugeordnet sein, welche z. B. durch eine Datenbankabfrage ermittelt wird. Dies ermöglicht die Anpassung zur Aktualisierung der Funktion. Es ist außerdem denkbar, dass eine automatische Fehlererkennung und - behebung durchgeführt wird, wenn eine Abweichung des tatsächlichen Einbauorts der Komponente erkannt wird. Dadurch wird eine höhere Zuverlässigkeit und Verfügbarkeit der Anlage gewährleistet.

In einer weiteren Möglichkeit kann vorgesehen sein, dass die Anpassungsspezifikation eine Darstellung und/oder Auflistung der wenigstens einen Abweichung, vorzugsweise einer Mehrzahl von Abweichungen, umfasst, bei welcher insbesondere die Abweichung im Schaltplan und/oder Anschlussplan hervorgehoben ist. Dies kann den Vorteil haben, dass der Benutzer auf einen Blick sehen kann, welche Abweichungen zwischen der Installationsvorgabe (also bspw. dem ursprünglichen Schaltplan) und dem tatsächlichen Aufbau bestehen. Dadurch wird es einfacher, Fehler zu erkennen und zu korrigieren. Es ist außerdem möglich, dass eine automatische Überprüfung der Abweichungen durchführt und dem Benutzer eine Liste der notwendigen Anpassungen als Korrekturvorschläge zur Verfügung gestellt wird.

Vorteilhaft ist es darüber hinaus, wenn im Rahmen der Erfindung die bereitgestellte Installationsvorgabe und vorzugsweise ein digitaler Schaltplan der Installationsvorgabe auf Basis der Anpassungsspezifikation hinsichtlich der wenigstens einen Abweichung aktualisiert wird, um den tatsächlichen zumindest teilweisen Aufbau der Anlage wiederzugeben. Dies kann den Vorteil haben, dass die Installationsvorgabe immer auf dem neuesten Stand ist und somit eine optimale Verwendung für bspw. Wartungen der Anlage gewährleistet werden kann. Es ist außerdem möglich, dass die Aktualisierung der Installationsvorgabe automatisch erfolgt, sobald eine Abweichung erkannt wird. Dadurch wird der Aufwand für den Nutzer minimiert und die Fehleranfälligkeit reduziert.

Ferner kann im Rahmen der Erfindung vorgesehen sein, dass die Anpassung für die Steuerung und insbesondere der Steuerungsprogrammierung auf Basis der Anpassungsspezifikation automatisiert zumindest dadurch erfolgt, dass wenigstens eine Beschreibungsdatei für die Anlage und/oder Komponenten der Anlage, vorzugsweise Anschlusselemente und/oder Geräte, bevorzugt eine IODD (IO-Link Device Description), angepasst, insbesondere zur Beschreibung des tatsächlichen zumindest teilweisen Aufbaus der Anlage aktualisiert, wird. Dies kann den Vorteil haben, dass durch die Automatisierung der Anpassung eine höhere Genauigkeit und Fehlerfreiheit erreicht wird, da die Beschreibungsdatei die tatsächlichen Komponenten der Anlage widerspiegelt. Durch die Verwendung einer Beschreibungsdatei wie der IODD kann eine einheitliche Beschreibung der Anlage und ihrer Komponenten gewährleistet sein, was die Kompatibilität und Interoperabilität erhöhen kann.

Vorzugsweise kann vorgesehen sein, dass die Anpassungsspezifikation ein Vorschlag zur Anpassung für die Steuerung und insbesondere der Steuerungsprogrammierung ist. Dabei kann eine Ausgabe der Anpassungsspezifikation an einen Benutzer initiiert werden, um den Vorschlag bestätigen zu lassen. Dies kann den Vorteil haben, dass die Anpassungsspezifikation zuvor manuell überprüft werden kann.

Ein weiterer Vorteil im Rahmen der Erfindung ist erzielbar, wenn die Anpassungsspezifikation eine Anleitung zur Anpassung für die Steuerung und insbesondere der Steuerungsprogrammierung umfasst, deren Ausgabe vorzugsweise als Schritt-für-Schritt-Anleitung für einen Benutzer initiiert wird. Dies kann den Vorteil haben, dass die Programmierung der Steuerung schneller und einfacher durchgeführt werden kann, da der Benutzer durch die Schritt-für-Schritt-Anleitung durch den Anpassungsprozess geführt wird. Es ist außerdem möglich, dass die Anpassungsspezifikation auch eine automatische Anpassung der Steuerung und der Steuerungsprogrammierung ermöglicht, die auf Basis der Eingabe von Parametern durch den Benutzer durchgeführt wird. Dadurch kann die Anpassung noch schneller und effizienter durchgeführt werden.

Auch ist es optional denkbar, dass die bereitgestellte Installationsspezifikation auf Basis einer automatisierten Auswertung einer Montage- und/oder Anschlussdokumentation und einer Ist-Spezifikation resultiert. Hierbei kann die Ist-Spezifikation zumindest durch wenigstens einen der folgenden Schritte erhalten werden:
- Ermitteln der tatsächlichen Verbindung der Geräte mit den Anschlusselementen zumindest teilweise durch eine automatisierte Abfrage an den Anschlusselementen, vorzugsweise über eine Kommunikationsschnittstelle und/oder einen Feldbus, und/oder
- Auswerten eines Einbauorts wenigstens eines der verbundenen Geräte auf Basis eines mechanischen Modells, und/oder
- Auswerten einer visuellen Aufzeichnung zumindest des Teils der Anlage, und/oder
- Elektronische Auswertung von Komponenten der Anlage, vorzugsweise einer Ausgabe der Komponenten, und/oder
- Auswerten einer Benutzereingabe.

Dabei kann die Ist-Spezifikation den tatsächlichen zumindest teilweisen Aufbau zumindest des Teils der Anlage und/oder die tatsächliche Verbindung der Geräte mit den Anschlusselementen bei der Anlage spezifizieren. Dies ermöglicht es, Anpassungen für die Steuerung zu ermitteln, die aufgrund einer Differenz des tatsächlichen Aufbaus und insbesondere der tatsächlichen Verbindung zum vorgegeben Aufbau bzw. der vorgegeben Verbindung notwendig werden.

Des Weiteren ist es im Rahmen der Erfindung optional möglich, dass die bereitgestellte Installationsspezifikation auf Basis einer automatisierten Auswertung einer Montageund/oder Anschlussdokumentation und einer Ist-Spezifikation resultiert. Dabei kann die Ist-Spezifikation den tatsächlichen zumindest teilweisen Aufbau zumindest des Teils der Anlage und/oder die tatsächliche Verbindung der Geräte mit den Anschlusselementen bei der Anlage spezifizieren. Weiter kann die Montage- und/oder Anschlussdokumentation zumindest teilweise aus einer automatisierten Dokumentation von Installationshandlungen erhalten werden, bei welcher ein Benutzer für die Durchführung der Installationshandlungen schrittweise durch einen Computer zum zumindest teilweisen Aufbau der Anlage, zumindest hinsichtlich des Teils der Anlage, und/oder zur Verbindung der Geräte mit den Anschlusselementen angeleitet wird. Dies kann den Vorteil haben, dass die Installationshandlungen auf effiziente und zuverlässige Weise ausgeführt und dokumentiert werden, was die Fehlerquote reduziert und die Qualität der Installation erhöht. Es ist außerdem möglich, dass die automatisierte Dokumentation der Installationshandlungen dazu beiträgt, den Installationsprozess zu beschleunigen und die Aufwand zu senken, da weniger manuelle Dokumentationsarbeit erforderlich ist.

Vorzugsweise kann vorgesehen sein, dass bei der automatisierten Dokumentation für die jeweilige Installationshandlung eine manuelle Bestätigung des Benutzers erfasst wird, dass die Installationshandlung ordnungsgemäß durchgeführt worden ist, um auf dieser Basis die Dokumentation vorzunehmen. Dabei kann die Anleitung und/oder die Bestätigung und/oder die Dokumentation unter Angabe zumindest eines konkreten Anschlusses, insbesondere eines Ports und/oder einer Klemme, für zumindest eines der Anschlusselemente erfolgen, an welchem zumindest eines der Geräte angeschlossen worden ist. Weiter kann zumindest dadurch bei der bereitgestellten Montage- und/oder Anschlussdokumentation die Verbindung der Geräte mit den Anschlusselementen auf Basis der bereitgestellten Installationsvorgabe dokumentiert werden, dass für die schrittweise Anleitung durch den Computer die Installationsvorgabe ausgewertet wird und/oder die Verbindung in Bezug auf die Installationsvorgabe dokumentiert wird. Dies kann den Vorteil haben, dass die Installation der Geräte schneller und effizienter durchgeführt werden kann, da die Installationsvorgabe schrittweise durch den Computer ausgeführt wird und somit menschliche Fehler minimiert werden können. Es ist außerdem möglich, dass durch die Dokumentation der Verbindung der Geräte mit den Anschlusselementen auf Basis der Installationsvorgabe eine spätere Wartung und/oder Reparatur der Geräte erleichtert wird, da die Dokumentation eine schnelle und genaue Identifikation von Verbindungsproblemen ermöglicht. Möglicherweise werden hier bei der Wartung und/oder Reparatur Änderungen des Aufbaus der Anlage notwendig, welche eine Anpassung der Steuerung durch die Anpassungsspezifikation erfordern.

Die Anlage, insbesondere industrielle Anlage, kann eine elektrische Maschine und/oder eine industrielle Automatisierungsanlage umfassen. Des Weiteren kann die Anlage, insbesondere industrielle Anlage, zumindest teilweise als eine mechanische und/oder eine hydraulische und/oder eine fluide und/oder eine pneumatische und/oder eine elektrische Anlage ausgebildet sein.

Das erfindungsgemäße Verfahren kann eine computer-gestützte Installation und/oder Inbetriebnahme und/oder Wartung und/oder Modernisierung und/oder eine Prüfung und/oder einen Betrieb der Anlage oder einer weiteren Anlage zumindest teilweise bereitstellen. Das Verfahren kann hierzu zumindest teilweise oder vollständig durch eine Vorrichtung zur Datenverarbeitung, insbesondere umfassend einen oder mehrere Computer, ausgeführt werden. Als computer-gestützt wird insbesondere verstanden, dass automatisierte Funktionen durch die Vorrichtung bereitgestellt werden. Dies kann dazu dienen, um einen Benutzer wie einen Installateur bei der Arbeit an der Anlage zu unterstützen. Dabei kann die Installation z. B. eine Erstinstallation oder eine erneute Installation der Anlage oder einer weiteren Anlage betreffen, bei welcher die Anlage gemäß ihrer vorgegebenen Topologie aufgebaut wird. Der Aufbau kann konkret einen Einbau und Anschluss von mehreren Komponente der Anlage umfassen. Dies geschieht vorzugsweise anhand einer vorgegebenen Installationsvorgabe. Darüber hinaus kann die Inbetriebnahme ein Einrichten und/oder Prüfen der Anlage umfassen, und die Wartung eine Überprüfung und/oder Reparatur und/oder einen Austausch einzelner oder mehrerer der Komponenten der Anlage betreffen. Die Modernisierung der Anlage kann ferner einen Austausch von Komponenten betreffen, um die Anlage mit einer neuen/angepassten oder verbesserten Funktionalität zu erweitern und/oder die Effizienz und Leistung der Anlage zu verbessern.

Es ist möglich, dass das erfindungsgemäße Verfahren ein Bereitstellen einer Installationsvorgabe, insbesondere mit einem digitalen Schaltplan und/oder einem mechanischen Plan, umfasst. Hierzu kann die Installationsvorgabe z. B. in der Form von digitalen Daten abgerufen werden, bspw. aus einem Datenspeicher oder einer Datenbank, und/oder nicht-flüchtig in einer Vorrichtung zur Datenverarbeitung hinterlegt sein. Die Installationsvorgabe kann einen Soll-Plan umfassen, welcher den gewünschten Aufbau der Anlage zumindest teilweise angibt.

Die bereitgestellte Installationsvorgabe kann dazu dienen, einen zumindest teilweisen Aufbau, insbesondere einen mechanischen und/oder einen fluiden und/oder einen pneumatischen und/oder hydraulischen und/oder einen elektrischen Aufbau, zumindest eines Teils der Anlage vorzugeben. Bei dem vorgegebenen zumindest teilweisen Aufbau können Geräte, insbesondere Sensoren und/oder Aktoren, und wenigstens ein oder mehrere Anschlusselemente, insbesondere ein oder mehrere Module, zur Bereitstellung von Automatisierungsfunktionen verbunden werden. Die Verbindung kann elektrisch und/oder für einen Signal- und/oder Datenaustausch und/oder kabelgebunden und/oder via Funk erfolgen. Weiter kann die Verbindung im Feld und/oder dezentral vorgesehen sein. Für die Verbindung können z. B. jeweils ein oder mehrere der Geräte mit Anschlüssen eines jeweiligen Anschlusselements verbunden werden.

Die Verbindung der Geräte der Anlage mit den Anschlusselementen kann bevorzugt im Feld erfolgen. "Im Feld" bedeutet insbesondere in diesem Zusammenhang, dass die Geräte und/oder Anschlusselemente nicht zentral im Schaltschrank verbunden sind, sondern dezentral an verschiedenen Orten innerhalb der Anlage verteilt sind und dort miteinander verbunden werden können. Dies ermöglicht eine flexible und platzsparende Installation der Anlage und erleichtert auch Wartungs- und Reparaturarbeiten vor Ort.

Das eine oder die mehreren Anschlusselemente können als zumindest eines der folgenden ausgebildet sein und/oder zumindest eines der folgenden umfassen:
- ein Modul,
- ein Feldbusmodul,
- ein Masterelement, vorzugsweise ein IO-Link-Master und/oder ein Feldbusmaster,
- ein Verteiler,
- ein Klemmkasten,
- ein Netzgerät,
- eine Sicherung,
- eine Anschlusskarte,
- einen Signalwandler,
- ein Steuergerät, vorzugsweise Motorsteuergerät,
- ein Teil einer Steuerungseinrichtung,

Die Verbindungen zwischen den Komponenten, d. h. dem zumindest einen Anschlusselement und den Geräten, kann so vorgesehen sein, dass jedes der Anschlusselemente zur Verbindung mit einem oder mehreren der Geräte dient. Hierzu kann das jeweilige Anschlusselement mehrere Anschlüsse für die Geräte aufweisen. Konkret kann es vorgesehen sein, dass das jeweilige Anschlusselement mindestens 2 oder mindestens vier oder mindestens sechs Anschlüsse aufweist, um an jedem der Anschlüsse mindestens eines der Geräte zu verbinden. Die Verbindungen können elektrische Verbindungen und/oder Daten- und/oder Signal-Verbindungen umfassen. Unter einer elektrischen Verbindung kann dabei auch eine Verbindung zur elektrischen Energieversorgung verstanden werden. Ein Signalaustausch kann auch einen analogen Signalaustausch umfassen, der Datenaustausch vorzugsweise einen digitalen Signalaustausch. Darüber hinaus kann die Verbindung im Feld und/oder dezentral vorgesehen sein. Im dezentralen Fall erfolgt die Verbindung insbesondere außerhalb einer zentralen Steuerungseinrichtung und/oder außerhalb eines Schaltschrankes direkt im Feld. Ferner kann die Verbindung kabelgebunden und/oder via Funk erfolgen, d. h., dass die Anschlusselemente und/oder Geräte zumindest teilweise einen Kabel-Anschluss und/oder eine Funkschnittstelle aufweisen können. Die Anschlüsse können ferner zur Verbindung mit einem Steckverbinder ausgestaltet sein. Darüber hinaus können die Anschlüsse eines jeweiligen Anschlusselements auch an einem Gehäuse des Anschlusselements vorgesehen sein, und bevorzugt jeweils mit einer Leiterplatte und/oder Elektronik innerhalb des Gehäuses elektrisch verbunden sein. Das Gehäuse kann eine Abdichtung aufweisen und/oder eine Vergussmasse für die Elektronik zumindest teilweise umgeben, um eine wasser-, staubund/oder feuchtigkeitsgeschützte, d. h. insbesondere IP67 -fähig, Ausbildung des Anschlusselements zu ermöglichen.

Die Verbindung eines oder mehrerer der Geräte mit dem oder einem der Anschlusselemente kann vorzugsweise durch einen Anschluss des einen Geräts oder der mehreren Geräte an einen Anschluss oder mehreren Anschlüssen des Anschlusselements erfolgen. Hierzu kann der jeweilige Anschluss bspw. als ein Port oder eine Klemme ausgebildet sein. Dabei muss die Verbindung nicht zwangsläufig eine Verbindung nur zwischen zwei Komponenten sein. Durch ein T-Stück ist es bspw. möglich, dass nicht nur ein, sondern zwei Geräte an einem Anschluss wird, oder auch, dass ein Gerät an zwei Anschlüsse angeschlossen wird.

Es kann ferner bei dem erfindungsgemäßen Verfahren ein Bereitstellen einer Montageund/oder Anschlussdokumentation vorgesehen sein, bei welcher auf Basis der bereitgestellten Installationsvorgabe der zumindest teilweise Aufbau dokumentiert ist. Der zumindest teilweise Aufbau kann dabei einen mechanischen und/oder einen hydraulischen und/oder einen fluiden und/oder einen pneumatischen und/oder einen elektrischen Aufbau umfassen. Ebenfalls ist es denkbar, dass bei der Montage- und/oder Anschlussdokumentation auf Basis der bereitgestellten Installationsvorgabe die Verbindung der Geräte mit dem Anschlusselement bzw. mit den Anschlusselementen dokumentiert ist. Die Montage- und/oder Anschlussdokumentation kann somit dazu dienen, die von einem Benutzer auf Basis der Installationsvorgabe durchgeführte Montage und durchgeführten Verbindungen zu dokumentieren. Hierzu kann bspw. eine Bestätigung einzelner Installationshandlungen, insbesondere Installationsschritte, durch den Benutzer vorgesehen sein. Auch kann es möglich sein, dass die Installationshandlungen zumindest teilweise automatisch bestätigt werden.

Es ist möglich, dass bei dem erfindungsgemäßen Verfahren und insbesondere bei der Montage- und/oder Anschlussdokumentation Abweichungen zwischen dem dokumentierten zumindest teilweisen Aufbau, insbesondere der/den dokumentierten Verbindung(en), d. h. der Dokumentation, und dem vorgegebenen zumindest teilweisen Aufbau bzw. der vorgegebenen Verbindung(en) gemäß der Installationsvorgabe ermittelt und/oder erkannt werden. Die Abweichungen können dem Benutzer ausgegeben werden und/oder der Benutzer kann die Abweichungen korrigieren und/oder bestätigen.

Es ist weiter es denkbar, dass auch die Dokumentation nicht dem tatsächlichen, also realen, zumindest teilweisen Aufbau zumindest eines Teils der Anlage, insbesondere nicht der/den tatsächlichen Verbindungen(en) bei der Anlage, entspricht. Dies kann bspw. durch eine fehlerhafte Bestätigung möglich sein. Daher ist es möglich, dass eine Ist-Spezifikation bereitgestellt wird, welche einen tatsächlichen zumindest teilweisen Aufbau zumindest eines Teils der Anlage und/oder eine tatsächliche Verbindung der Geräte mit dem Anschlusselement bzw. den Anschlusselementen bei der Anlage spezifiziert. Die Ist-Spezifikation kann z. B. durch eine elektronische Auswertung des oder der Anschlusselemente, z. B. durch eine Kommunikation mit dem jeweiligen Anschlusselement, ermittelt werden. Hierzu kann das jeweilige Anschlusselement bspw. zurückmelden, welche Geräte dort angeschlossen und/oder welche Anschlüsse belegt sind. Ebenfalls kann die Ist-Spezifikation z. B. dadurch ermittelt werden, dass eine Ausgabe der Geräte und/oder eine Benutzereingabe ausgewertet wird.

Es ist ferner möglich, dass ein Abgleichergebnis auf Basis einer automatisierten Auswertung der bereitgestellten Montage- und/oder Anschlussdokumentation und auf Basis der Ist-Spezifikation ermittelt wird. Hierbei kann bspw. eine Differenz zwischen der Ist-Spezifikation und der Montage- und/oder Anschlussdokumentation ermittelt werden. Diese Differenz ist vorzugsweise eine Differenz zwischen dem tatsächlichen zumindest teilweisen Aufbau und dem dokumentierten zumindest teilweisen Aufbau, jeweils zumindest hinsichtlich des Teils der Anlage, und/oder zwischen der tatsächlichen Verbindung und der dokumentierten Verbindung. Die ermittelte Differenz kann sodann im Abgleichergebnis bereitgestellt, vorzugsweise ausgegeben, werden. Hierdurch wird der Vorteil erzielt, dass eine Abweichung zwischen der Dokumentation und dem Ist-Zustand der Anlage, d. h. dem tatsächlichen zumindest teilweisen Aufbau bzw. der tatsächlichen Verbindung, erkannt und ggf. dem Benutzer ausgegeben werden kann. Damit können Arbeiten an der Anlage vereinfacht und zuverlässiger erfolgen.

Die Anschlusselemente können jeweils als Modul und/oder Masterelement ausgebildet sein, welche vorzugsweise zur Verteilung von Energie und/oder Datenströmen dienen. Als Masterelement können die Anschlusselemente ferner zur Datenkommunikation mit sekundären Geräten ausgebildet sein. Vorzugsweise kann zumindest ein Teil der Anschlusselemente und/oder der Geräte jeweils eine Elektronik aufweisen, welche softwarebasierte Funktionen, bevorzugt Automatisierungsfunktionen, aufweist. Die Funktionen sind bspw. Kommunikations- und/oder Steuerungsfunktionen für die Anlage. Um die Funktionen für eine spezifische Anlage zu parametrisieren, kann ggf. eine Geräteeinrichtung vorgesehen sein.

Es ist bspw. eine computer-gestützte Geräteeinrichtung bei der Anlage denkbar. Die Geräteeinrichtung kann z. B. eine Parametrisierung der Geräte und/oder eine Hinterlegung von Spezifikationen umfassen, die die Parametrisierung der Geräte ermöglichen (ähnlich einer Treiberinstallation). Es ist denkbar, dass hierzu ein Bereitstellen von zumindest einer gerätespezifischen Einrichtungsspezifikation für die verbundenen Geräte erfolgt. Anschließend kann eine Übertragung der zumindest einen gerätespezifischen Einrichtungsspezifikation an wenigstens eines der Anschlusselemente, vorzugsweise Masterelemente, und/oder an wenigstens eines der damit verbundenen Geräte vorgesehen sein. Dabei kann die zumindest eine gerätespezifische Einrichtungsspezifikation auf Basis einer automatisierten Auswertung der bereitgestellten Anschlussdokumentation bereitgestellt und/oder übertragen werden. Die bereitgestellte Anschlussdokumentation kann ferner auf Basis der bereitgestellten Installationsvorgabe die Verbindung der Geräte mit den Anschlusselementen, vorzugsweise Masterelementen, dokumentieren.

Die gerätespezifische Einrichtungsspezifikation umfasst z. B. einen Gerätenamen für das jeweilige Gerät, um das Gerät eindeutig oder eineindeutig identifizieren zu können. Weiter kann die gerätespezifische Einrichtungsspezifikation eine Kommunikationsadresse, vorzugsweise eine Netzwerkadresse, bevorzugt eine IP-Adresse umfasst. Auch kann die gerätespezifische Einrichtungsspezifikation eine Gerätebeschreibung, vorzugsweise eine IODD, umfassen, welche bevorzugt Beschreibungsdaten wie Geräteparameter und/oder Eigenschaften des jeweiligen Geräts beschreibt, um eine Parametrisierung des Geräts auf Basis der Gerätebeschreibung zu ermöglichen. Die Beschreibungsdaten umfassen ferner bspw. Spezifikationen zur Geräte-ID und/oder zur IO-Link-Version, die implementiert sind, und/oder eine Angabe einer Zykluszeit der Kommunikation und/oder der Betriebsmodi und/oder zur Datenstruktur für Prozessdaten und/oder zur eindeutigen Identifikation des Geräts und/oder zur Art der Parametrisierung und/oder zur Datenbreite und/oder zur Verarbeitungszeit.

Darüber hinaus ist es denkbar, dass eine Masterelement- und/oder Geräteeinrichtung vorgesehen ist, bei welcher gerätespezifischen Namen bei dem zumindest einen jeweiligen Masterelement und/oder bei den Geräten eingerichtet werden. Dies kann es ermöglichen, dass die gerätespezifischen Namen für die Bereitstellung der Automatisierungsfunktionen und insbesondere für eine Kommunikation zwischen der mindestens einen Steuerungseinrichtung und den Geräten verwendet werden. Die gerätespezifischen Namen sind z. B. device-specific-tags gemäß einer IO-Link Spezifikation. Die Verwendung von gerätespezifischen Namen kann den Vorteil haben, dass die Namen im Gegensatz zu E/A-Adressen das Geräte und/oder seine Funktion(en) semantisch bezeichnen können und daher zur leichteren Programmierung und/oder Wartung beitragen. So können die gerätespezifischen Namen bspw. direkt für eine Steuerungsprogrammierung verwendet werden. Darüber hinaus kann bei einem Anschließen eines der Geräte an einen beliebigen Anschluss eines Anschlusselements, insbesondere Masterelements, dynamisch dem Anschluss der gerätespezifischen Namen des daran angeschlossenen Geräts zugewiesen werden. Es ist somit dann nicht notwendig, dass aufwendig die E/A-Adresse des Anschlusses bei der Steuerungsprogrammierung der Ansteuerung des Geräts zugeordnet wird.

Es können darüber hinaus weitere Möglichkeiten zur Parametrisierung der Geräte, insbesondere in einem Engineering System (ES), vorgesehen sein. Eine erste Möglichkeit besteht bspw. darin, dass das ES die Steuerung, vorzugsweise eine Steuerungseinrichtung, konfiguriert. Hierbei können auch die Anschlusselemente, vorzugsweise E/A-Module, mit ihren Anschlüssen, bevorzugt Ports, vorzugsweise IO-Link-Ports, definiert werden. Ein Software-Tool ("Device-Tool") kann aus dem ES aufgerufen werden und erhält dann vom ES eine temporäre Parameterdatei, um das angeschlossene Gerät zu parametrisieren. Das Software-Tool kann konkret als ein IO-Link Device Tool ausgebildet sein. Ein grundsätzlicher Funktionstest des Sensors oder Aktors ist mithilfe des Tools ebenfalls möglich. Schließlich kann das IO-Link Device Tool die Veränderung von Stell- und Kenngrößen in Sensor oder Aktor ermöglichen, ohne dabei die komplexe SPS-Steuerung der Anlage zu verändern.

Eine weitere Möglichkeit besteht bspw. darin, dass Informationen aus der Gerätebeschreibung, insbesondere IODD, oder aus Datenblättern sowie die zugehörigen Parameter für die Geräte in der Steuerung festgelegt werden. Dies erfordert ggf. die separate Programmierung von IODD-Informationen in Datenbausteine der Steuerung. Eine weitere Möglichkeit besteht bspw. darin, dass das die Gerätebeschreibung wie IODD eines Benutzers in eine GSDML-Datei für die Anlage und/oder eines der Komponenten der Anlage und/oder eines der Anschlusselemente und insbesondere einen IO-Link-Master integriert wird. Die GSDML-Datei kann in der Steuerung hinterlegt werden und von der Steuerung für die Parametrisierung der Geräte genutzt werden. Dabei kann es vorgesehen sein, dass die Struktur, also die Art und Topologie zumindest eines Teils der Anlage/Komponenten/Geräte/Anschlusselemente, im GSDML gespeichert ist, und die Einstellungen zur Parametrisierung in der Steuerung, z. B. einer SPS-Projektdatei, gespeichert werden. Eine weitere Möglichkeit besteht vorzugsweise darin, dass zumindest eines der Anschlusselemente, bevorzugt in der Form von Ethernet-Module und/oder IO-Link-Master-Module, über einen internen Webserver verfügt und besonders bevorzugt wenigstens eine oder mehrere Gerätebeschreibungen, insbesondere IODD(s), darüber direkt in das Anschlusselement eingespielt werden können.

Es ist möglich, dass die Anschlusselemente Ihre Nachbarn "kennen". Die Anschlusselemente, vorzugsweise Feldbusmodule, können ihre Nachbaranschlusselemente über eine Erkennungsfunktion wie über das Protokoll LLDP (Link Layer Discovery Protocol) entdecken. LLDP ermöglicht es den Anschlusselementen, ihre Nachbaranschlusselemente im Netzwerk zu erkennen, indem sie Informationen über ihre Identität, ihre Fähigkeiten und/oder ihre Verbindungsinformationen austauschen. Die Erkennungsfunktion kann auf der Link-Ebene des OSI-Modells (Open Systems Interconnection) eingesetzt werden und es ermöglichen, Netzwerkgeräte zu identifizieren, ohne dass dafür eine manuelle Konfiguration erforderlich ist. Anschlusselemente, die diese Erkennungsfunktion und vorzugsweise LLDP unterstützen, können dabei periodisch (LLDP-) Pakete aussenden, die Informationen über ihre Identität und ihre Verbindungsinformationen enthalten. Andere Anschlusselemente, die diese Pakete empfangen, können die Informationen auslesen und ihre Nachbarn identifizieren. Dies kann den Vorteil haben, dass die Netzwerktopologie zumindest teilweise bekannt gemacht und/oder geprüft werden kann.

Die Anlage kann mehrere Komponenten, vorzugsweise in der Form von Geräten und/oder in der Form von wenigstens einem Anschlusselement für die Geräte, umfassen. Weitere Komponenten können Verbindungsmittel sein, wie Kabel und/oder Steckverbinder, um die Verbindung zwischen den Geräten und dem wenigstens einen Anschlusselement herzustellen.

Die Geräte können zumindest als eines der folgenden Geräte ausgebildet sein:
- Einen Sensor,
- Ein Aktor,
- Eine Lichtschranke,
- Ein binärer Schalter,
- Ein binärer Sensor,
- Ein binärer Aktor,
- Ein IO-Link Device Sensor,
- Ein IO-link Device Aktor.

Die gerätespezifische Einrichtungsspezifikation, insbesondere die Gerätebeschreibung, vorzugsweise in der Form einer IODD, und/oder die Beschreibungsdaten der Gerätebeschreibung, können dazu ausgeführt sein, spezifische Informationen über ein Gerät zu enthalten. Diese Informationen sind beispielsweise Angaben hinsichtlich der Funktionen, Eigenschaften, Konfigurationen, oder Schnittstellen des Geräts. Die Gerätebeschreibung ist bspw. in der Form von einer oder mehreren Dateien vorgesehen. Dabei können die Beschreibungsdaten der Gerätebeschreibung in einer Beschreibungssprache wie XML (Extensible Markup Language), GSDML (Generic Station Description Markup Language) oder DDL (Device Description Language) formuliert sein. Beispiele für Gerätebeschreibungen sind IODD (IO Device Description), FDI (Field Device Integration), ESI (EtherCAT Slave Information) und EDD (Electronic Device Description). Außerdem kann eine Integration der Gerätebeschreibung bzw. der Beschreibungsdaten in eine GSDML-Datei vorgesehen sein.

Zur Parametrisierung kann ggf. auch ein Software-Tool verwendet werden, welches anhand der gerätespezifischen Beschreibungsdaten die Parameter an das Gerät übertragen kann.

Eine weitere Möglichkeit ist die Verwendung einer GSDML-Datei. GSDML steht für "Generic Station Description Markup Language" und ist ein standardisiertes Dateiformat für die Beschreibung wenigstens einer Komponente der Anlage. Dabei können die Gerätebeschreibungen bzw. die Beschreibungsdaten in die GSDML eingefügt und dann einer zentralen Steuerung zur Verfügung gestellt werden. Dies ermöglicht die automatische Parametrisierung der an die Anschlusselemente angeschlossenen Geräte.

Darüber hinaus können die Geräte als analoge und/oder digitale Geräte ausgebildet sein. Es können jeweils mehrere Geräte mit einem Anschlusselement verbunden sein. Jedes der Anschlusselemente kann entsprechend als ein Verteiler für die damit verbunden Geräte ausgeführt sein. Die Geräte können direkt über Kabel und/oder Steckverbinder oder ggf. auch indirekt mit dem Anschlusselement verbunden werden. Die indirekte Verbindung erfolgt bspw. über einen, insbesondere IO-Link-, Analogkonverter und/oder einen, insbesondere IO-Link-, Hub. An den (IO-Link-) Hub können z. B. die Geräte in der Form von binären Standardsensoren angeschlossenen werden. Hierzu können digitale (Standard-) Eingänge/Ausgänge (E/A) am Hub vorgesehen sein.

Das Anschlusselement, insbesondere Masterelement, kann als ein Mastermodul, vorzugsweise IO-Link Master, ausgebildet sein. Gleichzeitig kann das Anschlusselement als Feldbusmodul ausgebildet sein und somit einen Feldbus-Anschluss aufweisen. Dies ermöglicht die Vernetzung mit anderen Anschlusselementen und/oder mit wenigstens oder genau einer Steuerungseinrichtung über den Feldbus. Die Steuerungseinrichtung ist bspw. eine zentrale Steuerung wie eine SPS ("Speicherprogrammierbare Steuerung"). Darüber hinaus kann die Steuerungseinrichtung auch als eine dezentrale Steuerung ausgeführt sein, welche ggf. mit weiteren dezentralen Steuerungen die Steuerungsaufgabe direkt im Feld wahrnimmt. Das Feldbusmodul kann dazu ausgeführt sein, auf Basis der Feldbus-Kommunikation die mit dem Anschlusselement verbundenen Geräte anzusteuern und/oder auszuwerten.

Ein Lesen und Schreiben des Gerätes, insbesondere IO-Link Devices, ist bspw. via CoE (CAN application protocol over EtherCAT) und/oder AoE (Automation Device Protocol over EtherCAT) möglich. Die Ausbildung von zumindest einem Teil der Geräte als IO-Link Devices erlaubt es, dass Informationen wie Prozessdaten, Diagnose- und Parametrierungsdaten digital durch die Geräte übertragen werden. Die Funktionen eines Web-Servers, eines IO-Link Device Tools und IIOT ( "Industrial Internet of Things") können ggf. über eine EoE (Ethernet over EtherCAT) Kommunikation aktiviert werden. Zusätzlich können auch weitere digitale oder analoge Geräte in die Anlage eingebunden werden.

Die Anlage ist vorzugsweise in der Form einer elektrischen und/oder industriellen Anlage und/oder einer elektrischen Maschine und/oder einer industriellen Automatisierungsanlage und/oder einer Produktions- und/oder Förder- und/oder Fertigungsanlage und/oder einer Automobilproduktionsanlage und/oder einer Logistikanlage vorgesehen. Die Anlage kann ferner als eine hydraulische oder eine pneumatische oder eine fluide oder eine mechanische Anlage ausgebildet sein. Bei der Anlage können entsprechend - automatisiert gesteuert - Flüssigkeiten oder Gase durch Schlauch- und/oder Rohrleitungen oder Ventile transportiert oder ein Kühlmittel zugeführt werden oder mechanische Kräfte auf ein Objekt ausgeübt werden, um eine gewünschte Funktion bereitzustellen. Beispiele für solche Anlagen sind eine hydraulische Presse, eine pneumatische Förderanlage, eine Anlage mit einer fluide Kühlmechanik oder eine Zerspanungsanlage oder eine mechanische Fertigungsmaschine. Der Aufbau der Anlage, insbesondere fluide Aufbau, kann Leitungen wie Schlauch- und/oder Rohrleitungen, um technische und produktionsbedingte Anforderungen zu erfüllen und/oder Verbrauchsmaterial zu befördern.

Eine Installationsdokumentation, insbesondere eine Installationsvorgabe, vorzugsweise umfassend einen Schaltplan oder einen mechanischen Plan, bevorzugt in digitaler Form, kann angeben, wie die elektrische, hydraulische, pneumatische, fluide oder mechanische Anlage aufgebaut ist und wie die verschiedenen Komponenten miteinander verbunden/verschaltet sind, um gewünschte Funktionen wie Automatisierungsfunktionen bereitzustellen. Mit anderen Worten kann durch die Installationsvorgabe eine Topologie der Anlage angegeben und insbesondere vorgegeben werden. Dabei kann zwischen einer zentralen und dezentralen Topologie unterschieden werden. In einer zentralen Topologie können die Geräte überwiegend direkt mit einem zentralen Schaltschrank und insbesondere mit einer zentralen Steuerungseinrichtung verbunden sein. In einer dezentralen Topologie hingegen werden mehrere Verteiler, auch Anschlusselemente bezeichnet, verwendet, an denen jeweils nur eine begrenzte Anzahl von Geräten verbunden sein kann. Die Verbindungen zwischen den Geräten gehen dann in der Regel direkt zum räumlich nächstgelegenen Verteiler und können von dort aus entweder direkt an die Steuerungseinrichtung weitergeleitet oder zunächst interpretiert oder umgewandelt werden. Der Unterschied zwischen den beiden Topologien besteht also darin, dass in einer zentralen Topologie überwiegend alle Verbindungen direkt zum Schaltschrank laufen, während in einer dezentralen Topologie mehrere Verteiler verwendet werden, um die Verbindungen mit den Geräten dezentral herzustellen. Entsprechend sollten Komponenten der Anlage, welche üblicherweise im Schaltschrank vorgesehen sind, für das Feld angepasst werden. Komponenten wie Netzgeräte zur Energieversorgung können daher wasser-, staubund/oder feuchtigkeitsgeschützt, d. h. insbesondere IP67 -fähig, ausgebildet sein.

Die Anlage kann eine oder mehrere dezentrale Steuerungseinrichtungen aufweisen. Diese können jeweils nur einen Teil der gesamten Funktionalität, vorzugsweise der Automatisierungsfunktionen, der Anlage bereitstellen und/oder ansteuern. Hierzu können die dezentralen Steuerungseinrichtungen jeweils als eine Komponente ausgebildet sein, die im Feld eingesetzt werden kann. Dies bedeutet vorzugsweise, dass die Steuerungseinrichtungen wasser-, staub- und/oder feuchtigkeitsgeschützt, d. h. insbesondere IP67 -fähig, ausgebildet sind. Weiter kann die jeweilige dezentrale Steuerungseinrichtung als Funktionsmodul ausgebildet sein und entsprechend mit weiteren Funktionsmodulen wie einem Netzgerät zur Energieversorgung und/oder zumindest einem der Anschlusselemente, insbesondere Module, und/oder einem Mastermodul wie einem IO-Link-Master und/oder einem Netzwerk-Switch und/oder einer Motor- bzw. Servoansteuerung modular verbunden werden. Dieser modulare Verbund kann durch eine entsprechende Dichtungsanordnung ebenfalls wasser-, staub- und/oder feuchtigkeitsgeschützt, d. h. insbesondere IP67 -fähig, ausgebildet sein. Die jeweilige dezentrale Steuerungseinrichtung kann ferner einen Industrie-PC umfassen und/oder ihre Steuerungsaufgaben durch eine Kommunikation mit den Geräten über die Anschlusselemente bzw. über einen Feldbus vornehmen.

Die Anlage ist kann eine Fertigungslinie und/oder Fördertechnik und/oder Lager- und Kommissioniersysteme und/oder automatisierte Sortiersysteme und/oder Software zur Steuerung und Überwachung von Prozessen aufweisen. Weiter kann die Anlage mehrere Komponenten aufweisen. Die Komponenten können Geräte, insbesondere Betriebsmittel wie Aktoren und/oder Sensoren, und/oder Steuerungseinrichtungen und/oder Antriebe oder Schaltanlagen und/oder Ventilinseln und/oder dergleichen umfassen. Ferner können die Komponenten auch Anschlusselemente umfassen, welche als Verteiler für ein oder mehrere der Geräte dienen können. Zusätzlich können Verbindungsmittel wie Kabel oder Steckverbinder oder dergleichen zur Verbindung der Komponenten der Anlage verwendet werden.

Als Verbindungsmittel können Kabel und/oder Steckverbinder nach Standards wie M12, M8 oder M5 sowie drei-adrige Kabel in Frage kommen. Dies kann den Vorteil haben, dass eine schnelle und einfache Montage der Sensoren und Aktoren gewährleistet wird. Die Verbindung der Verbindungsmittel kann bspw. über eine Bajonett- oder Schraubverbindung erfolgen. Die Kontakte der Steckverbinder können in einer rechteckigen oder runden Ausführung angeordnet sein und unterschiedliche Materialien wie Messing oder Edelstahl aufweisen. Die Steckverbinder können außerdem über eine Schutzart wie IP67 verfügen, um eine zuverlässige Funktion in rauen Umgebungen zu gewährleisten.

Im Rahmen der Erfindung kann ein Anschlusselement einen Verteiler und bezeichnen, welcher zur Verbindung im Feld und/oder dezentralen Verschaltung von Geräten wie Aktoren, Sensoren und Maschinen in der Anlage dient. Dabei kann das Anschlusselement als ein Feldbusmodul ausgebildet sein, welches über einen Feldbus mit einer zentralen Steuerungseinrichtung wie einer SPS (Speicherprogrammierbaren Steuerung) und/oder mit wenigstens einer dezentralen Steuerungseinrichtung verbunden sein kann. Feldbusmodule ermöglichen damit die Kommunikation zwischen der Steuerungseinrichtung und den Geräten unter Verwendung eines Feldbusprotokolls wie PROFIBUS, PROFINET, CANopen oder EtherCAT. Es können an dem Anschlusselement ferner mehrere Geräte angeschlossen werden, ggf. auch über IO-Link und insbesondere, um auf Basis/mittels eines empfangenen Feldbussignals die Geräte anzusteuern und/oder auszulesen. Auf diese Weise können die Automatisierungsfunktionen der Geräte dezentral bereitgestellt werden.

Eine weitere mögliche Variante eines Anschlusselements kann ggf. auch direkt ein elektrisches Steuersignal und/oder Sensorsignal zwischen der Steuerungseinrichtung und dem Gerät weiterleiten. Ferner kann das Anschlusselement als ein I/O-Anschlusselement ausgebildet sein, bei dem die angeschlossenen Geräte nicht oder nicht nur über einen Feldbus, sondern (auch) über digitale oder analoge Ein- und Ausgänge über das Anschlusselement mit der Steuerungseinrichtung verbunden werden. Das Anschlusselement dient damit als Schnittstelle zwischen Steuerungseinrichtung und Geräten wie Sensoren, Aktoren und Maschinen und kann eine Umwandlung und Verarbeitung von Signalen aus der Steuerungseinrichtung in für die Geräte nutzbare Signale und/oder umgekehrt vornehmen. Die Ein- und Ausgänge ermöglichen dabei eine Übertragung von Prozessdaten, um die Funktionalität der Anlage bereitzustellen.

Optional kann es vorgesehen sein, dass das jeweilige Anschlusselement eine Mehrzahl von Leuchtmitteln, vorzugsweise LEDs, aufweist, welche jeweils einem Anschluss, vorzugsweise Port, oder mehreren Anschlüssen des Anschlusselements zugeordnet sind und einen Betriebszustands des jeweiligen Anschlusses / Ports / der Ports anzeigen.

Es kann vorgesehen sein, dass wenigstens ein Anschlusselement mit zumindest einem der Geräte durch ein Kommunikationssystem zur digitalen und insbesondere Punkt-zu-Punkt Kommunikation verbunden ist. Ein konkretes Beispiel für ein solches Kommunikationssystem ist IO-Link. Unter IO-Link wird insbesondere ein Kommunikationssystem zur Anbindung intelligenter Sensoren und Aktoren an ein Automatisierungssystem bezeichnet, welches in der Norm IEC 61131-9 unter der Bezeichnung Single-drop digital communication interface for small sensors and actuators (SDCI) normiert ist. Mit anderen Worten kann wenigstens eines der Anschlusselemente daher als ein Anschlusselement für dieses Kommunikationssystem, insbesondere als ein IO-Link-Modul, ausgebildet sein. Dies bedeutet, dass das Anschlusselement dazu ausgebildet sein kann, eine Kommunikation zwischen dem Anschlusselement und den daran angeschlossenen (verbundenen) Geräten über das Kommunikationssystem und vorzugsweise über den IO-Link-Standard vorzunehmen.

IO-Link ermöglicht eine digitale Kommunikation mit den Geräten und bietet eine hohe Flexibilität bei der Anbindung von Geräten unterschiedlicher Hersteller. Das Anschlusselement kann dabei als IO-Link-Master (Masterelement) oder IO-Link-Device ausgebildet sein und ermöglicht somit eine einfache Integration von IO-Link-Geräten in die dezentrale Verschaltung der Anlage. Durch den Einsatz von IO-Link können zudem umfangreiche Diagnose- und Parametrisierungsmöglichkeiten genutzt werden, um eine effiziente und zuverlässige Steuerung der Anlage zu gewährleisten. Darüber hinaus kann das Anschlusselement eine Feldbusschnittstelle aufweisen (und daher gleichzeitig auch als Feldbusmodul ausgebildet sein), um bspw. Steuerungsbefehle und/oder eine Kommunikation über einen Feldbus mit einer Steuerungseinrichtung und/oder weiteren Anschlusselementen zu ermöglichen.

Das Kommunikationssystem umfasst bspw. einen Master, vorzugsweise Masterelement, insbesondere IO-Link-Master, und einen oder mehrere Geräte, also Sensoren oder Aktoren, die zur Kommunikation mit dem Master geeignet sind. Dies können konkret IO-Link-Devices sein. Der Master stellt insbesondere die Schnittstelle zur überlagerten Steuerung, d.h. einer dezentralen oder zentralen Steuerungseinrichtung wie einer SPS, zur Verfügung und steuert die Kommunikation mit den angeschlossenen Geräten. Der Master kann einen oder mehrere Ports, insbesondere IO-Link-Ports, aufweisen, an dem jeweils nur ein Gerät angeschlossen werden kann. Dies kann auch ein Hub sein, der den Anschluss von klassisch schaltenden Sensoren und Aktoren ermöglicht.

Das Gerät, insbesondere IO-Link-Gerät, kann eine bidirektionale Kommunikation mit dem Anschlusselement ermöglichen und/oder als ein (intelligenter) Sensor, Aktor, Hub, oder auch eine Mechatronik-Komponente wie z. B. ein Greifer oder ein Netzteil sein. Das Gerät kann dabei Identifikationsdaten, wie z. B. eine Typbezeichnung und eine Seriennummer oder Parameterdaten (z. B. Empfindlichkeiten, Schaltverzögerungen oder Kennlinien, bereitstellen, die über das Kommunikationssystem und insbesondere IO-Link-Protokoll lesbar bzw. schreibbar sind. Das Ändern der Parameter kann vorteilhafterweise durch eine Parametrisierung anhand von einer Gerätebeschreibung erfolgen. Weiter können die Geräte in der Lage sein, detaillierte Diagnoseinformationen zu liefern. Die Parameter der Geräte wie Sensoren und Aktoren können geräte- und technologiespezifisch sein. Daher können für die jeweiligen Geräte Parameterinformationen vorgesehen sein, vorzugsweise in Form einer Gerätebeschreibung wie IODD (IO Device Description) mit der Beschreibungssprache XML.

Eine mögliche Erweiterung für das Kommunikationssystem IO-Link ist IO-Link Safety. Diese Erweiterung bietet eine zusätzliche Sicherheitskommunikationsschicht auf den vorhandenen Master- und Device-Schichten an, wodurch diese zu "FS-Master" und "FS-Device" werden.

Eine weitere mögliche Erweiterung für das Kommunikationssystem IO-Link ist IO-Link Wireless, welches eine physikalische Erweiterung des Systems auf Basis von IEEE 802.15.1 darstellt. Ein IO-Link Wireless Master verhält sich dabei wie ein Master im übergeordneten System, während die IO-Link Wireless Devices über virtuelle Ports über eine Funkstrecke angebunden sind.

Das Kommunikationssystem kann eine Punkt-zu-Punkt Kommunikation zwischen dem Master/Masterelement und den Geräten bereitstellen. Das Kommunikationssystem ermöglicht damit eine direkte Verbindung zwischen dem Master/Masterelement und den Geräten, ohne dass eine Vermittlung durch andere Systeme notwendig ist. Dadurch wird eine schnelle und zuverlässige Kommunikation, insbesondere feldbusunabhängig, gewährleistet.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer dezentralen Topologie.
- Fig. 2: eine perspektivische Darstellung eines Anschlusselements.
- Fig. 3: eine beispielhafte Detaildarstellung des Bereichs A aus Fig. 2.
- Fig. 4: Teile einer Installationsvorgabe.
- Fig. 5: ein Computer, eine grafische Benutzeroberfläche und ein Lesegerät.
- Fig. 6: eine schematische Visualisierung eines Verfahrens gemäß Ausführungsvarianten der Erfindung.

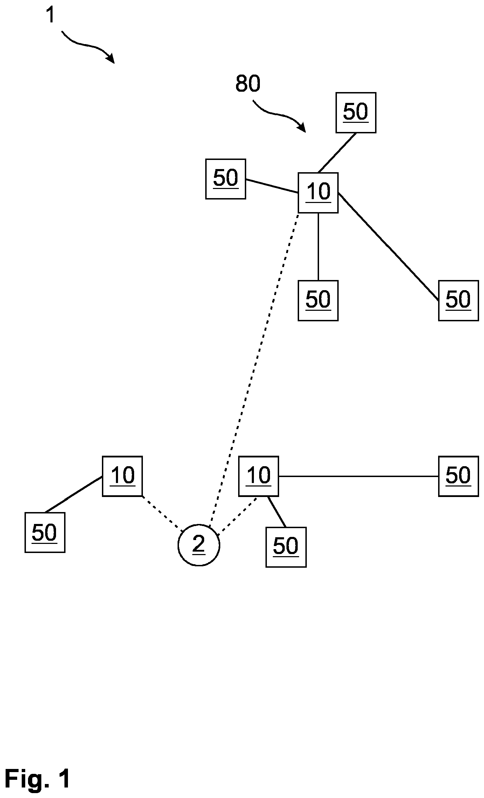

In Fig. 1 ist eine beispielhafte dezentrale Topologie einer industriellen Anlage 1 dargestellt. Es ist eine Steuerungseinrichtung 2 gezeigt, die als zentrale (SPS) oder als eine von mehreren dezentralen Steuerungseinrichtungen 2 ausgeführt sein kann. Weiter sind mehrere Anschlusselemente 10, vorzugsweise Module 10, dargestellt, die mit der Steuerungseinrichtung 2 über ein Kommunikationssystem wie einen Feldbus (gestrichelte Linie) verbunden sind.

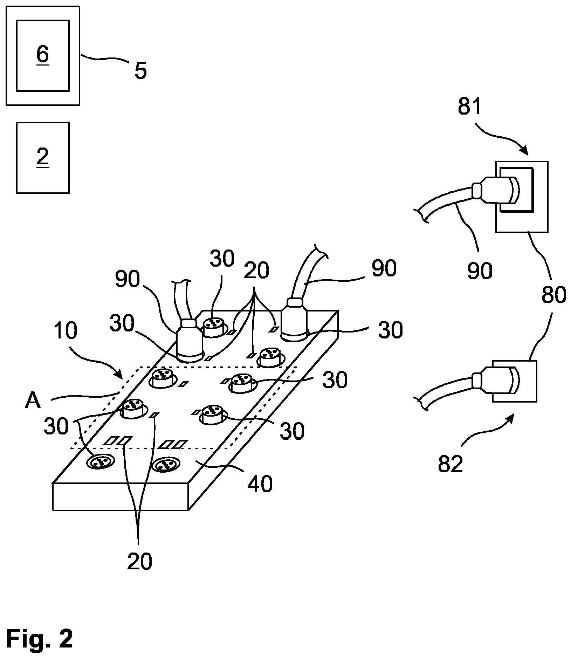

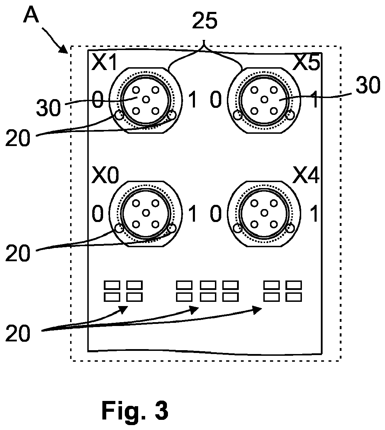

Des Weiteren sind zur Bereitstellung von Automatisierungsfunktionen mehrere Geräte 50 vorgesehen, die mit den Anschlusselementen 10 im Feld und/oder dezentral verbunden sind. In Fig. 2 und 3 sind die jeweiligen Anschlusselemente 10 mit weiteren beispielhaften Einzelheiten dargestellt. Mit jedem der Anschlusselemente 10 können dabei ein oder mehrere der Geräte 50 verbunden sein. Hierzu werden die Geräte 50 insbesondere über Verbindungsmittel 90 wie Kabel und/oder Steckverbinder an entsprechende Anschlüsse 30, insbesondere Ports 30, der Anschlusselemente 10 angeschlossen. Die Anschlusselemente 10 dienen auf diese Weise zur Verbindung der jeweils damit verbundenen Geräte 50 mit der Steuerungseinrichtung 2 und/oder zur Verteilung einer Daten- und/oder Signalübertragung an die jeweils damit verbundenen Geräte 50.

Die Geräte 50 können z. B. Aktoren 81 oder Sensoren 82 sein. Die Verbindung zwischen den Anschlusselementen 10 und zumindest einen Teil der Geräte 50 kann eine bidirektionale Punkt-zu-Punkt Verbindung sein, vorzugsweise über ein Kommunikationssystem zur digitalen Kommunikation wie IO-Link. Die Verbindung zwischen den Anschlusselementen 10 und zumindest einem Teil der Geräte 50 kann ferner eine analoge und/oder digitale Verbindung sein. Damit ermöglichen es die Anschlusselemente 10, dass verschiedene Verbindungsarten zum Anschluss der Geräte 50 verwendet werden können. Es ist möglich, dass die Anschlusselemente 10 entsprechend den verschiedenen Verbindungsarten auch daran angepasste, verschiedene Anschlüsse 30, insbesondere Ports 30, aufweisen können. Die Anschlüsse 30 können an einem Gehäuse 40 des Anschlusselements 10 angeordnet sein.

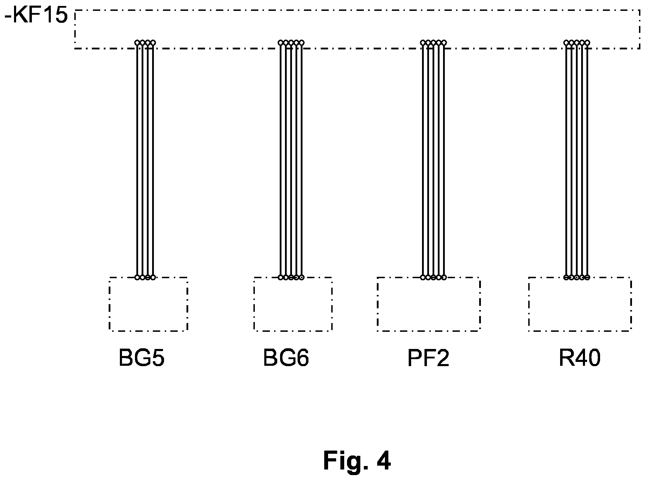

In Fig. 4 ist ein beispielhafter Auszug aus einem digitalen Schaltplan dargestellt, welcher Teil der bereitgestellten Installationsvorgabe sein kann. Die Installationsvorgabe kann vorgesehen sein, um eine elektrische Verschaltung für die Anlage 1 vorzugeben, bei welcher Geräte 50 und Anschlusselemente 10 zur Bereitstellung von Automatisierungsfunktionen im Feld und/oder dezentral miteinander elektrisch verbunden sind.

Es ist denkbar, dass vor der Installation der Anlage 1 zwar eine Topologie der Anlage 1 über die Installationsvorgabe bekannt ist, jedoch nicht, welches konkrete Anschlusselement mit welchem konkreten Gerät über welches Verbindungsmittel 90 verbunden ist. Damit ist gemeint, dass vor der Installation zwar gattungsgemäß die benötigten Komponenten 80 durch die Installationsvorgabe bekannt sein können, die (ein)eindeutige Zuordnung zu konkreten Komponenten 80 jedoch noch nicht erfolgt ist. Bspw. ist in Fig. 1 dargestellt, dass jeweils ein oder mehrere der Geräte 50 mit einem jeweiligen Anschlusselement 10 verbunden sein können. Bei der Installation ist es dann möglich, dass das Anschlusselement 10 aus einem von mehreren und ggf. auch die Geräte 50 aus einem oder mehreren gattungsgemäßen Komponenten 80 ausgewählt werden.

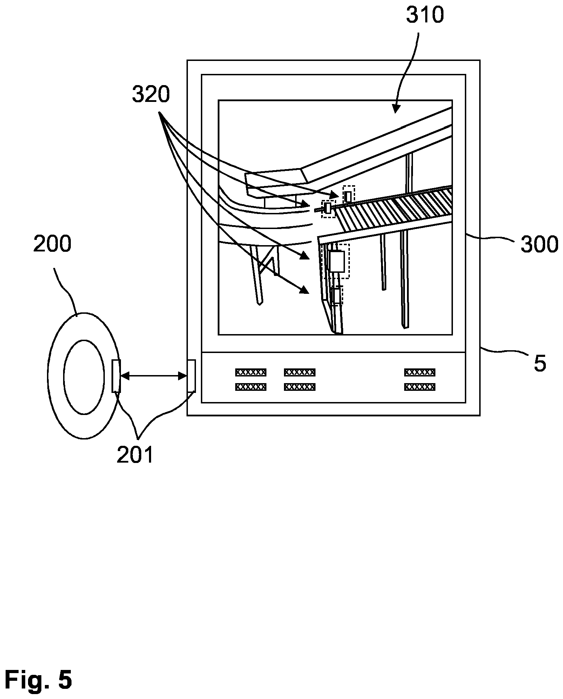

Um die Installation und Dokumentation - sowie auf Basis der Dokumentation auch eine Geräteeinrichtung und/oder Konfiguration und/oder Programmierung einer Steuerung - zu vereinfachen, kann die Installation wie folgt durch einen Computer unterstützt werden. Hierbei kann neben der Anleitung von Installationsschritten auch gleichzeitig die Anschlussdokumentation durch eine automatische Dokumentation der Installationsschritte erstellt werden. Der beispielhafte Ablauf ist wie folgt:
a. Zunächst erfolgt ein Initiieren von Ausgaben an einen Benutzer, durch welche der Benutzer schrittweise zur Durchführung von Installationsschritten angeleitet wird (s. die grafische Benutzeroberfläche in Fig. 5). Die Installationsschritte, auch Installationshandlungen bezeichnet, können ein Auswählen, ein Anbringen und ein Verbinden von Geräten 50 und/oder Anschlusselementen 10 und/oder Verbindungsmitteln 90 umfassen. Bspw. wird der Benutzer zum Auswählen einer Komponente 80, wie eines der Anschlusselemente 10 oder eines Verbindungsmittels 90, aufgefordert. Zur Auswahl scannt der Benutzer einen Identifikator wie einen maschinenlesbaren Code an der Komponente 80 über ein Lesegerät 200 wie einen Handscanner ein. Das Lesegerät 200 kann eine Schnittstelle 201, z. B. eine Funkschnittstelle, aufweisen, um auf Basis des eingescannten Identifikators eine Kennzeichnung der Komponente 80 an eine entsprechende Schnittstelle 201 des Computers 5 zu übertragen.
b. Der Computer 5 kann anhand der übertragenen Kennzeichnung einen oder mehrere mögliche Einbauorte 320 oder (falls ein Verbindungsmittel 90 ausgewählt wurde) Anschlusses 30 / Ports 30 der Anschlusselemente 10 in der Anlage 1 identifizieren. Hierzu kann in der Installationsvorgabe nach entsprechend geeigneten Stellen gesucht werden. Die Installationsvorgabe kann hierzu in digitaler Form sowohl einen elektrischen Schaltplan als auch eine damit verknüpfte mechanische und/oder dreidimensionale Darstellung der Anlage 1 aufweisen. In einer Visualisierung der räumlichen, insbesondere mechanischen und/oder dreidimensionalen, Darstellung 310 der Anlage 1 können dann auf einer Benutzeroberfläche 300 die möglichen Einbauorte 320 angezeigt werden. Falls das Verbindungsmittel 90 ausgewählt wurde, kann auch ein Leuchtmittel 20 aufleuchten, dass dem entsprechenden Anschluss 30 / Port 30 zugeordnet ist.
c. Der Benutzer kann ggf. einen der Einbauorte 320 auswählen und die Komponente 80 am gewünschten Einbauort 320 bzw. am Anschluss 30 / Port 30 installieren bzw. anschließen.
d. Anschließend kann der Benutzer diesen Installationsschritt bestätigen. Dies ermöglicht es dem Computer 5, den Installationsschritt zu dokumentieren und die Angabe des ausgewählten Einbauorts 320 bzw. Anschluss 30 / Ports 30 zu hinterlegen. Hierzu können eine Angabe zum Anschluss 30 / Port 30, bspw. eine Adresse des Anschlusses 30 / Ports 30, und/oder die Kennzeichnung der Komponente 80 und/oder Bezeichnung des Geräts 50 und/oder der Einbauort und/oder dergleichen in der Anschlussdokumentation hinterlegt werden.

Die Anschlussdokumentation dient somit insbesondere zur Dokumentation der Verbindung der Geräte 50 mit den Anschlusselementen 10 auf Basis der bereitgestellten Installationsvorgabe. Weiter kann die Anschlussdokumentation automatisch ausgewertet werden, um auf dieser Basis ein Abgleichergebnis zu ermitteln und für die Installation und/oder Inbetriebnahme und/oder Wartung und/oder Modernisierung und/oder im Betrieb der Anlage 1 bereitzustellen.

Durch das Abgleichergebnis kann insbesondere angegeben werden, ob die vorgegebene Installation mit einer tatsächlichen Installation übereinstimmt. Dies ist z. B. dann sinnvoll, wenn die vorgenannte Bestätigung durch den Benutzer fehlerhaft ist und/oder wenn beabsichtigt eine Abweichung von der Installationsvorgabe durch den Benutzer vorgenommen wird. Um diese Abweichung durch die automatisierte Auswertung zu erfassen, kann eine computer-gestützte Prüfung durchgeführt werden, ob die dokumentierte Verbindung der Geräte 50 mit den Anschlusselementen 10 mit einer tatsächlichen Verbindung der Geräte 50 mit den Anschlusselementen 10 übereinstimmt. Die Auswertung kann dabei ggf. auch eine Auswertung der Installationsvorgabe hinsichtlich der Verschaltung der Komponenten 80 umfassen.

Es kann die Übereinstimmung auch hinsichtlich der konkreten Anschlusses 30, vorzugsweise Ports 30, der Anschlusselemente 10, an welchen die Geräte 50 anzuschließen sind, geprüft werden (vgl. Fig. 2 und 3). Dies ist z. B. möglich, indem die Anschlusselemente 10 über das Kommunikationssystem oder eine andere Schnittstelle dahingehend abgefragt werden, welche der Anschlüsse 30 / Ports 30 belegt sind. In einigen Fällen, wie z. B. bei dem Einsatz von IO-Link-Geräten 50, könnten hierdurch auch weitere Details über das angeschlossene Gerät 50 ermittelt werden (wie eine Kennzeichnung oder dergleichen). Eine weitere Möglichkeit besteht darin, dass der Benutzer zu einer manuellen Aktivierung des Geräts 50 aufgefordert wird. Hierzu kann z. B. bei einem Sensor wie einer Lichtschranke eine Handbewegung dienen, welche eine Erfassung des Sensors auslöst. Bei einem Aktor kann bspw. eine Stromcharakteristik am Anschlusselement 10 ausgewertet werden. Die Aktivierung des Geräts 50 kann zu einer Ausgabe des Geräts 50 führen, die am Anschluss 30 bzw. Port 30 des Anschlusselements 10, an dem das Gerät 50 angeschlossen ist, erfasst werden kann. Durch die Erfassung dieser definierten Ausgabe des Geräts 50 ist es somit möglich, die tatsächliche Verbindung zu ermitteln.

Ferner kann es durch eine automatisierte Auswertung der bereitgestellten Anschlussdokumentation möglich sein, dass zumindest eine oder mehrere gerätespezifische Einrichtungsspezifikationen für die verbundenen Geräte 50 bereitgestellt und/oder an wenigstens eines der Anschlusselemente 10 und/oder an wenigstens eines der damit verbundenen Geräte 50 übertragen werden. Dabei kann an das jeweilige Anschlusselement 10 diejenigen der zumindest einen oder mehreren gerätespezifischen Einrichtungsspezifikationen in der Form von Gerätebeschreibungen übertragen werden, die für das wenigstens eine mit dem Anschlusselement 10 verbundenen Gerät 50 vorgesehen sind, insbesondere dieses korrekt beschreiben. Durch die automatisierte Auswertung der bereitgestellten Anschlussdokumentation kann dabei die für das Gerät 50 vorgesehene Gerätebeschreibung ermittelt werden. Hierzu wertet die automatisierte Auswertung z. B. die in der Anschlussdokumentation hinterlegten Angaben wie eine Gerätebezeichnung aus. Die Übertragung der Einrichtungsspezifikationen ermöglicht insbesondere eine automatisierte Parametrisierung der Geräte 50.

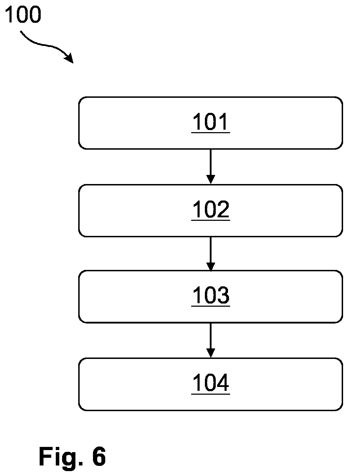

In Fig. 6 ist ein Verfahren 100 zur computer-gestützten Installation und/oder Inbetriebnahme und/oder Wartung und/oder Modernisierung einer industriellen Anlage 1 schematisch visualisiert. Gemäß einem ersten Verfahrensschritt 101 erfolgt hierbei ein Bereitstellen einer Installationsvorgabe, insbesondere mit einem digitalen Schaltplan und/oder digitalen mechanischen Plan, um einen zumindest teilweisen Aufbau zumindest eines Teils der Anlage 1 vorzugeben, bei welchem Geräte 50 und Anschlusselemente 10, insbesondere Module 10, zur Bereitstellung von Automatisierungsfunktionen elektrisch und/oder für einen Signal- und/oder Datenaustausch miteinander im Feld verbunden sind und durch mindestens eine Steuerungseinrichtung 2 auf Basis einer Steuerungsprogrammierung angesteuert werden. Gemäß einem zweiten Verfahrensschritt 102 erfolgt ein Bereitstellen einer Installationsspezifikation, welche einen tatsächlichen zumindest teilweisen Aufbau zumindest des Teils der Anlage 1, insbesondere eine tatsächliche Verbindung der Geräte 50 mit den Anschlusselementen 10, spezifiziert, wobei die Installationsspezifikation aus einer automatisierten Dokumentation des tatsächlichen zumindest teilweisen Aufbaus während der Installation und/oder Inbetriebnahme und/oder Wartung und/oder aus einer dynamischen Erhebung bei der Anlage 1 resultiert. Gemäß einem dritten Verfahrensschritt 103 erfolgt ein Ermitteln einer Anpassungsspezifikation auf Basis einer automatisierten Auswertung der Installationsspezifikation, wobei die Anpassungsspezifikation eine Anpassung für die Steuerung, insbesondere der Steuerungsprogrammierung der Steuerungseinrichtung 2, spezifiziert. Gemäß einem vierten Verfahrensschritt 104 erfolgt ein Bereitstellen der Anpassungsspezifikation für die Steuerungseinrichtung 2.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Anlage
- 2: Steuerungseinrichtung
- 5: Vorrichtung
- 6: Computerprogramm

- 10: Anschlusselement

- 20: Leuchtmittel

- 30: Anschluss, Port

- 40: Gehäuse

- 50: Gerät, Sensor, Aktor

- 80: Komponente
- 81: erste Komponente, Aktor
- 82: zweite Komponente, Sensor

- 90: Verbindungsmittel, Kabel

- 100: Verfahren
- 101: erster Verfahrensschritt
- 102: zweiter Verfahrensschritt
- 103: dritter Verfahrensschritt
- 104: vierter Verfahrensschritt

- 200: Lesegerät
- 201: Funkschnittstelle

- 300: Benutzeroberfläche
- 310: räumliche Darstellung

- 320: Einbauorte

## Patentansprüche

1. Verfahren (100) zur computer-gestützten Installation und/oder Inbetriebnahme und/oder Wartung und/oder Modernisierung einer industriellen Anlage (1), umfassend die nachfolgenden Schritte:
- Bereitstellen (101) einer Installationsvorgabe, insbesondere mit einem digitalen Schaltplan und/oder digitalen mechanischen Plan, um einen zumindest teilweisen Aufbau zumindest eines Teils der Anlage (1) vorzugeben, bei welchem Geräte (50) und Anschlusselemente (10), insbesondere Module (10), zur Bereitstellung von Automatisierungsfunktionen elektrisch und/oder für einen Signal- und/oder Datenaustausch miteinander im Feld verbunden sind und durch mindestens eine Steuerungseinrichtung (2) auf Basis einer Steuerungsprogrammierung angesteuert werden,
- Bereitstellen (102) einer Installationsspezifikation, welche einen tatsächlichen zumindest teilweisen Aufbau zumindest des Teils der Anlage (1), insbesondere eine tatsächliche Verbindung der Geräte (50) mit den Anschlusselementen (10), spezifiziert, wobei die Installationsspezifikation aus einer automatisierten Dokumentation des tatsächlichen zumindest teilweisen Aufbaus während der Installation und/oder Inbetriebnahme und/oder Wartung und/oder aus einer dynamischen Erhebung bei der Anlage (1) auf Basis der Installationsvorgabe resultiert,
- Ermitteln (103) einer Anpassungsspezifikation auf Basis einer automatisierten Auswertung der Installationsspezifikation, wobei die Anpassungsspezifikation eine Anpassung für die Steuerung, insbesondere der Steuerungsprogrammierung der Steuerungseinrichtung (2), spezifiziert,
- Bereitstellen (104) der Anpassungsspezifikation für die Steuerungseinrichtung (2).

2. Verfahren (100) nach Anspruch 1,
**dadurch gekennzeichnet,**
**dass** die automatisierte Auswertung der Installationsspezifikation umfasst:
- Ermitteln (103) eines Abgleichergebnisses auf Basis einer automatisierten Prüfung der bereitgestellten Installationsspezifikation hinsichtlich wenigstens einer Abweichung des tatsächlichen zumindest teilweisen Aufbaus zum vorgegebenen zumindest teilweisen Aufbaus.

3. Verfahren (100) nach einem der vorhergehenden Ansprüche,
**dadurch gekennzeichnet,**
**dass** das Ermitteln (103) der Anpassungsspezifikation automatisiert dadurch erfolgt, dass zu jeder Abweichung des tatsächlichen zumindest teilweisen Aufbaus zum vorgegebenen zumindest teilweisen Aufbaus wenigstens eine Teilanpassung für die Steuerung und insbesondere der Steuerungsprogrammierung ermittelt wird, welche geeignet ist, die jeweilige Abweichung zu kompensieren.

4. Verfahren (100) nach Anspruch 2 oder 3,
**dadurch gekennzeichnet,**
**dass** die Anpassung für die Steuerung und insbesondere der Steuerungsprogrammierung auf Basis der bereitgestellten Anpassungsspezifikation automatisiert erfolgt, wobei die wenigstens eine Abweichung eine Abweichung der tatsächlichen Verbindung der Geräte (50) mit den Anschlusselementen (10) zu der vorgegebenen Verbindung hinsichtlich des verwendeten Geräts (50) und/oder Anschlusselements (10) und/oder Anschlusses (30), vorzugsweise Ports, des Anschlusselements (10) betrifft, und die Anpassung für die Steuerung und insbesondere der Steuerungsprogrammierung insbesondere dadurch automatisiert erfolgt, dass das verwendete Gerät (50) und/oder Anschlusselement (10) und/oder der verwendete Port (30) und/oder deren Kennzeichnung in der Steuerungsprogrammierung aktualisiert wird.

5. Verfahren (100) nach einem der Ansprüche 2 bis 4,
**dadurch gekennzeichnet,**
**dass** die wenigstens eine Abweichung eine Abweichung eines tatsächlichen Einbauorts (320) wenigstens einer Komponente (80) der Anlage (1), vorzugsweise wenigstens eines der Geräte (50) und/oder Anschlusselemente (10), zu einem vorgegebenen Einbauort (320) der Komponente (80) betrifft, wobei den unterschiedlichen Einbauorten (320) unterschiedliche Funktionen der Komponente (80) zugeordnet sind, und die Anpassung für die Steuerung und insbesondere der Steuerungsprogrammierung insbesondere dadurch automatisiert erfolgt, dass die Funktion der Komponente (80) entsprechend dem tatsächlichen Einbauort (320) aktualisiert wird.

6. Verfahren (100) nach einem der Ansprüche 2 bis 5,
**dadurch gekennzeichnet,**
**dass** die Anpassungsspezifikation eine Darstellung und/oder Auflistung der wenigstens einen Abweichung, vorzugsweise einer Mehrzahl von Abweichungen, umfasst, bei welcher insbesondere die Abweichung im Schaltplan und/oder Anschlussplan hervorgehoben ist.

7. Verfahren (100) nach einem der Ansprüche 2 bis 6,
**dadurch gekennzeichnet,**
**dass** die bereitgestellte Installationsvorgabe und vorzugsweise ein digitaler Schaltplan der Installationsvorgabe auf Basis der Anpassungsspezifikation hinsichtlich der wenigstens einen Abweichung aktualisiert wird, um den tatsächlichen zumindest teilweisen Aufbau der Anlage (1) wiederzugeben.

8. Verfahren (100) nach einem der Ansprüche 2 bis 7,
**dadurch gekennzeichnet,**
**dass** die Anpassung für die Steuerung und insbesondere der Steuerungsprogrammierung auf Basis der Anpassungsspezifikation automatisiert zumindest dadurch erfolgt, dass wenigstens eine Beschreibungsdatei für die Anlage (1) und/oder Komponenten (80) der Anlage (1), vorzugsweise Anschlusselemente (10) und/oder Geräte (50), bevorzugt eine IODD, angepasst, insbesondere zur Beschreibung des tatsächlichen zumindest teilweisen Aufbaus der Anlage (1) aktualisiert, wird.

9. Verfahren (100) nach einem der vorhergehenden Ansprüche,
**dadurch gekennzeichnet,**
**dass** die Anpassungsspezifikation ein Vorschlag zur Anpassung für die Steuerung und insbesondere der Steuerungsprogrammierung ist, wobei eine Ausgabe der Anpassungsspezifikation an einen Benutzer initiiert wird, um den Vorschlag bestätigen zu lassen.

10. Verfahren (100) nach einem der vorhergehenden Ansprüche,
**dadurch gekennzeichnet,**
**dass** die Anpassungsspezifikation eine Anleitung zur Anpassung für die Steuerung und insbesondere der Steuerungsprogrammierung umfasst, deren Ausgabe vorzugsweise als Schritt-für-Schritt-Anleitung für einen Benutzer initiiert wird.

11. Verfahren (100) nach einem der vorhergehenden Ansprüche,
**dadurch gekennzeichnet,**
**dass** die bereitgestellte Installationsspezifikation auf Basis einer automatisierten Auswertung einer Montage- und/oder Anschlussdokumentation und einer Ist-Spezifikation resultiert, wobei die Ist-Spezifikation zumindest durch einen der folgenden Schritte erhalten werden:
- Ermitteln der tatsächlichen Verbindung der Geräte (50) mit den Anschlusselementen (10) zumindest teilweise durch eine automatisierte Abfrage an den Anschlusselementen (10), vorzugsweise über eine Kommunikationsschnittstelle und/oder einen Feldbus, und/oder
- Auswerten eines Einbauorts wenigstens eines der verbundenen Geräte (50) auf Basis eines mechanischen Modells, und/oder
- Auswerten einer visuellen Aufzeichnung zumindest des Teils der Anlage (1), und/oder
- Elektronische Auswertung von Komponenten (80) der Anlage (1), vorzugsweise einer Ausgabe der Komponenten (80), und/oder
- Auswerten einer Benutzereingabe,
wobei die Ist-Spezifikation den tatsächlichen zumindest teilweisen Aufbau zumindest des Teils der Anlage (1) und/oder die tatsächliche Verbindung der Geräte (50) mit den Anschlusselementen (10) bei der Anlage (1) spezifiziert.

12. Verfahren (100) nach einem der vorhergehenden Ansprüche,
**dadurch gekennzeichnet,**
**dass** die bereitgestellte Installationsspezifikation auf Basis einer automatisierten Auswertung einer Montage- und/oder Anschlussdokumentation und einer Ist-Spezifikation resultiert,
wobei die Ist-Spezifikation den tatsächlichen zumindest teilweisen Aufbau zumindest des Teils der Anlage (1) und/oder die tatsächliche Verbindung der Geräte (50) mit den Anschlusselementen (10) bei der Anlage (1) spezifiziert,
wobei die Montage- und/oder Anschlussdokumentation zumindest teilweise aus einer automatisierten Dokumentation von Installationshandlungen erhalten wird, bei welcher ein Benutzer für die Durchführung der Installationshandlungen schrittweise durch einen Computer zum zumindest teilweisen Aufbau der Anlage (1), zumindest hinsichtlich des Teils der Anlage (1), und/oder zur Verbindung der Geräte (50) mit den Anschlusselementen (10) angeleitet wird.

13. Verfahren (100) nach Anspruch 12,
**dadurch gekennzeichnet,**
**dass** bei der automatisierten Dokumentation für die jeweilige Installationshandlung eine manuelle Bestätigung des Benutzers erfasst wird, dass die Installationshandlung ordnungsgemäß durchgeführt worden ist, um auf dieser Basis die Dokumentation vorzunehmen, wobei vorzugsweise die Anleitung und/oder die Bestätigung und/oder die Dokumentation unter Angabe zumindest eines konkreten Anschlusses (30), insbesondere eines Ports und/oder einer Klemme, für zumindest eines der Anschlusselemente (10) erfolgt, an welchem zumindest eines der Geräte (50) angeschlossen worden ist, wobei vorzugsweise zumindest dadurch bei der bereitgestellten Montage- und/oder Anschlussdokumentation die Verbindung der Geräte (50) mit den Anschlusselementen (10) auf Basis der bereitgestellten Installationsvorgabe dokumentiert ist, dass für die schrittweise Anleitung durch den Computer die Installationsvorgabe ausgewertet wird und/oder die Verbindung in Bezug auf die Installationsvorgabe dokumentiert wird.

14. Computerprogramm, umfassend Befehle, die bei der Ausführung des Computerprogramms durch einen Computer diesen veranlassen, das Verfahren nach einem der vorhergehenden Ansprüche auszuführen.

15. Vorrichtung zur Datenverarbeitung, die eingerichtet ist, das Verfahren nach einem der Ansprüche 1 bis 13 auszuführen.
